# EUROPEAN PATENT APPLICATION

(11) **EP 2 071 778 A2**
(43) Date of publication of application: **17.06.2009**
(21) Application number: 08159505.0
(22) Date of filing: 02.07.2008
(51) Int. Cl.: H04L 12/56

(54) **Data exchange method for guaranteeing quality of service between evolved node-B and network entity**

(30) Priority: 10.12.2007 KR 20070127869
(71) Applicant: Electronics and Telecommunications Research Institute, Daejeon-shi (KR); Samsung Electronics Co., Ltd, Suwon-si, Gyeonggi-do 442-742 (KR)
(72) Inventor: Baek, Seung-kwon, Daejeon-si (KR); Kim, Won-ik, Daejeon-si (KR); Song, Jae-su, Daejeon-si (KR); Kim, Hyung-sub, Seoul (KR); Shin, Yeon-seung, Daejeon-si (KR); Kim, Yeong-jin, Daejeon-si (KR)
(74) Representative: Betten & Resch

(57) **Abstract**

A data exchange method for guaranteeing quality of service (QoS) between an evolved Node-B (eNodeB) and a network entity is provided, including: registering QoS parameters to be used in a managed network; configuring a tunnel between the eNodeB and the network entity for a user traffic transmission and setting up a QoS mechanism between the eNodeB and the network entity using the QoS parameters; and QoS-processing data to be transmitted and received between the eNodeB and the network entity according to the QoS mechanism and providing the QoS-processed data through the configured tunnel, thereby guaranteeing QoS of an Internet protocol (IP) layer level considering an IP network structure in an IP-based mobile communication system.

## Description

### CROSS REFERENCE TO RELATED APPLICATIONS

This application claims priority from Korean Patent Application No. 10-2007-0127869, filed on December 10, 2007, the disclosure of which is incorporated herein in its entirety by reference.

### BACKGROUND OF THE INVENTION

### FIELD OF THE INVENTION

The present invention relates to a data exchange method for guaranteeing quality of service (QoS) between a base station (evolved Node-B (eNodeB)) and a network entity, and more particularly, to a technique for processing an Internet protocol (IP) packet between an eNodeB and a network entity.

This work was supported by the IT R&D program of Ministry of Information and Communication (MIC)/Institute for Information Technology Advancement (IITA) [2005-S-404-23, Research and development on 3G long-term evolution access system].

### DESCRIPTION OF THE RELATED ART

FIG. 1 is a block diagram showing the configuration of a third generation long term evolution (3G LTE) system. In a system having an IP-based connection between all network entities like the 3G LTE system, QoS of user plane (U-plane) data affecting quality of traffic should be considered.

FIG. 2 is a block diagram showing the configuration of a 3G system based on general packet radio service (GPRS) in which user traffic is transmitted via a Node-B, a radio network controller (RNC), a serving GPRS support node (SGSN), and a gateway GPRS support node (GGSN).

The RNC and SGSN and the SGSN and GGSN perform a data transmission/reception function using radio access bearer (RAB)-based tunneling. For this, a GPRS tunneling protocol (GTP) is used.

The GTP is an application protocol operating at a higher level of a user datagram protocol (UDP), and is a protocol for generating a GTP-packet data unit (PDU) including a GTP header and exchanging data between network nodes via a configured tunnel.

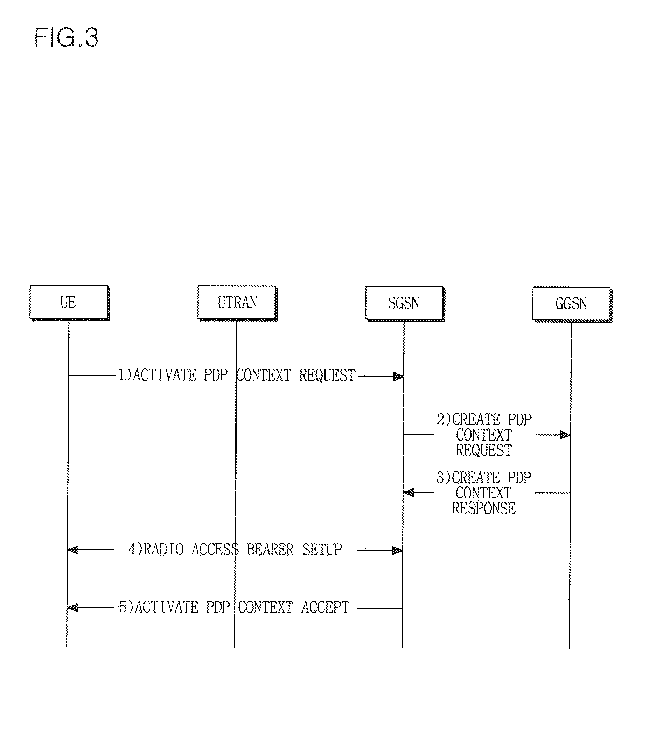

FIG. 3 shows a packet data protocol (PDP) activation procedure for a user service in a GPRS-based 3G system.

Referring to FIG. 3, in operation 1), a user equipment (UE) sends an "Activated PDP Context Request" message to the SGSN.

In operation 2), the SGSN having received the "Activated PDP Context Request" message generates a tunnel endpoint identifier (TE-ID) for sending data associated with requested PDP context and sends a "Create PDP Context Request" message to the GGSN. The TE-ID is an identifier to be used when the SGSN sends data to the GGSN.

In operation 3), the SGSN having received the "Create PDP Context Request" message from the SGSN stores a corresponding TE-ID and then sends a "Create PDP Context Response" message to the SGSN.

In operation 4) after operations 2) and 3), the SGSN creates a request for an "RAB Setup (Assignment)" procedure via the Node-B of a universal terrestrial radio access network (UTRAN). For this procedure, an "RAB Assignment Request" message and an "RAB Assignment Response" message are used.

In operation 5), the SGSN sends an "Activate PDP Context Accept" message to the UE after operation 4) is normally performed.

When the above-mentioned procedure is performed, "Activate PDP Context Request", "Activate PDP Context Response", "Create PDP Context Request", "Create PDP Context Response", "RAB Assignment Request", and "RAB Assignment Response" messages include information regarding QoS for a corresponding GTP tunnel and RAB and are used to exchange user data.

The 3G LTE system also exchanges data while guaranteeing quality of user traffic through a signal procedure similar to that shown in FIG. 3. However, there is no conventional technique for guaranteeing quality of specific user traffic considering an IP network structure.

Accordingly, the inventor has conducted the research on a technique capable of providing a differentiated IP packet service by guaranteeing QoS of an IP layer level considering an IP network structure in an IP-based mobile communication system.

### SUMMARY OF THE INVENTION

The present invention provides a data exchange method that can guarantee QoS between an eNodeB and a network entity capable of guaranteeing QoS of an IP layer level considering an IP network structure in an IP-based mobile communication system.

According to an aspect of the present invention, there is provided a data exchange method for guaranteeing QoS between an eNodeB and a network entity, including: registering QoS parameters to be used in a managed network; configuring a tunnel between the evolved NodeB and the network entity for a user traffic transmission and setting up a QoS mechanism between the eNodeB and the network entity using the QoS parameters; and QoS-processing data to be transmitted and received between the eNodeB and the network entity according to the QoS mechanism and providing the QoS-processed data through the configured tunnel.

Additional aspects of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.

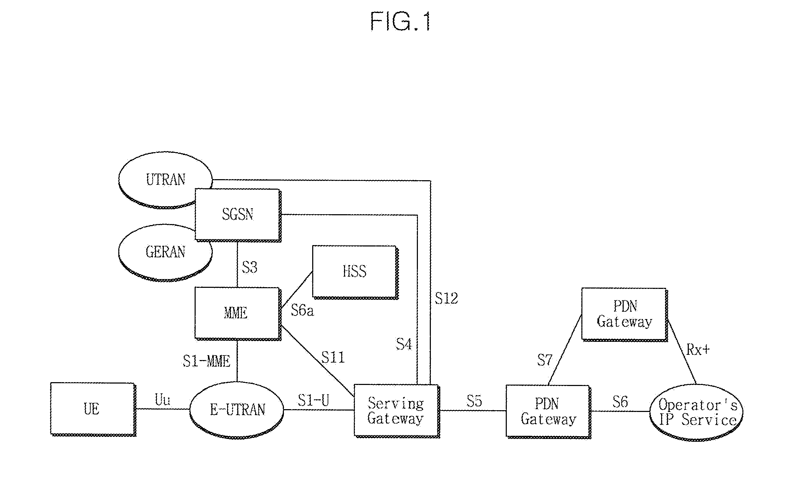

FIG. 1 is a block diagram showing the configuration of a 3G LTE system;

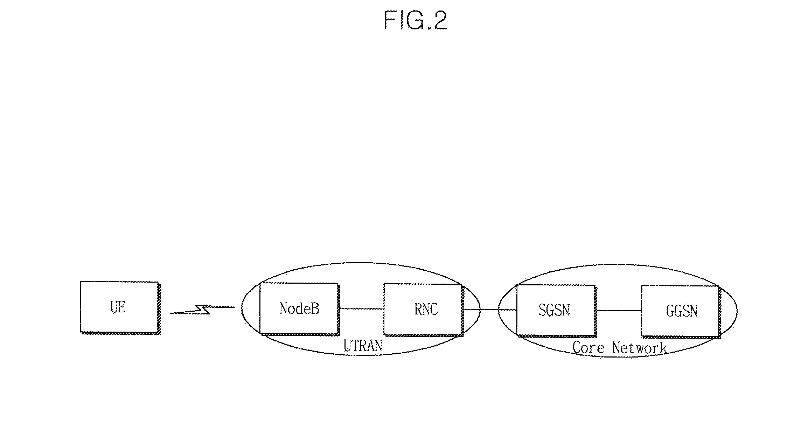

FIG. 2 is a block diagram showing the configuration of a GPRS-based 3G system;
FIG. 3 shows a PDP activation procedure for a user service in a GPRS-based 3G system;

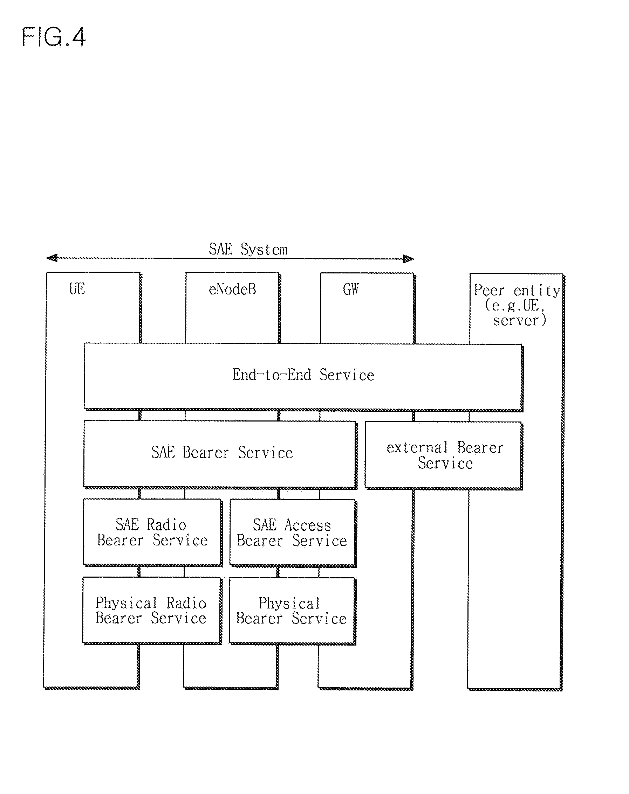

FIG. 4 shows an example of bearer setup for a user service in a mobile communication system;

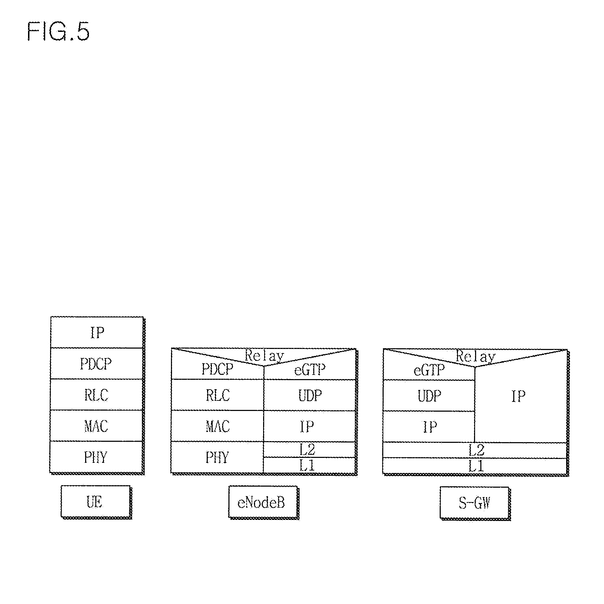

FIG. 5 shows a U-plane protocol structure of a 3G LTE system;

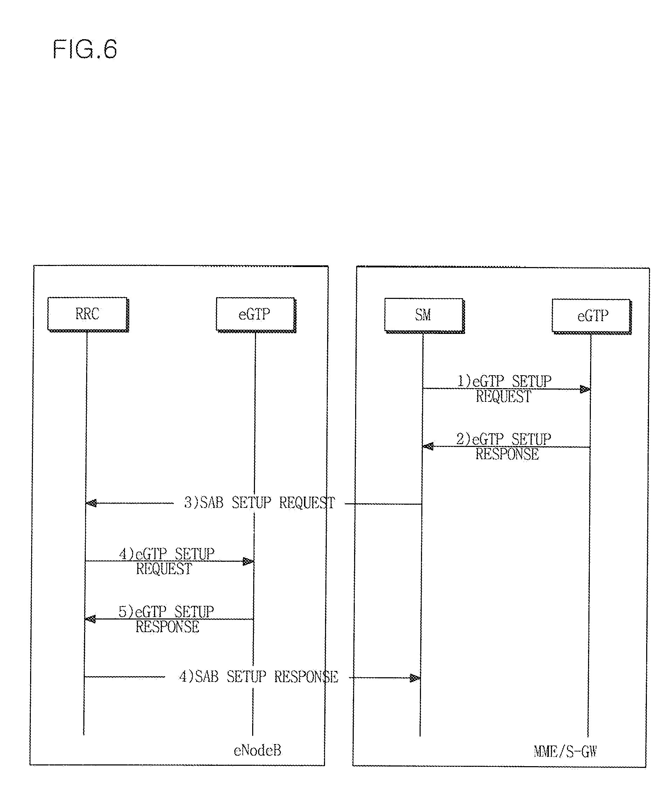

FIG. 6 shows a message procedure for configuring an eGTP tunnel between an eNodeB and a serving gateway (S-GW);

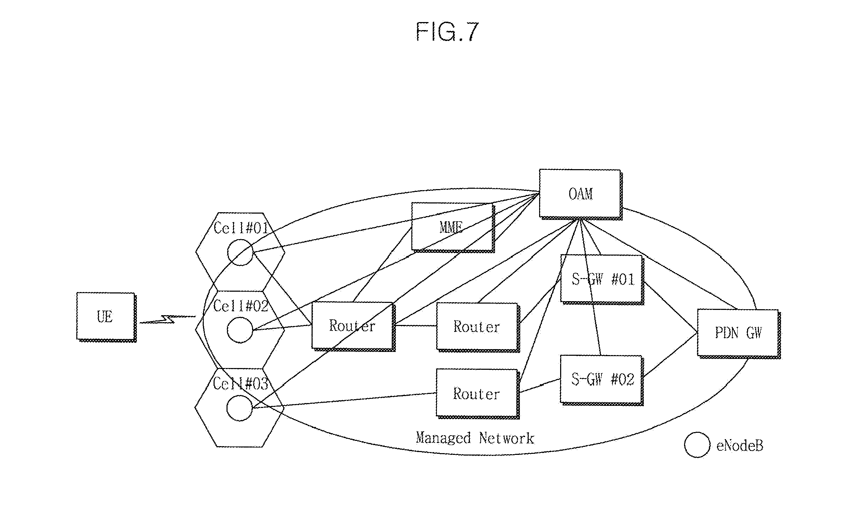

FIG. 7 shows a network structure of the 3G LTE system;

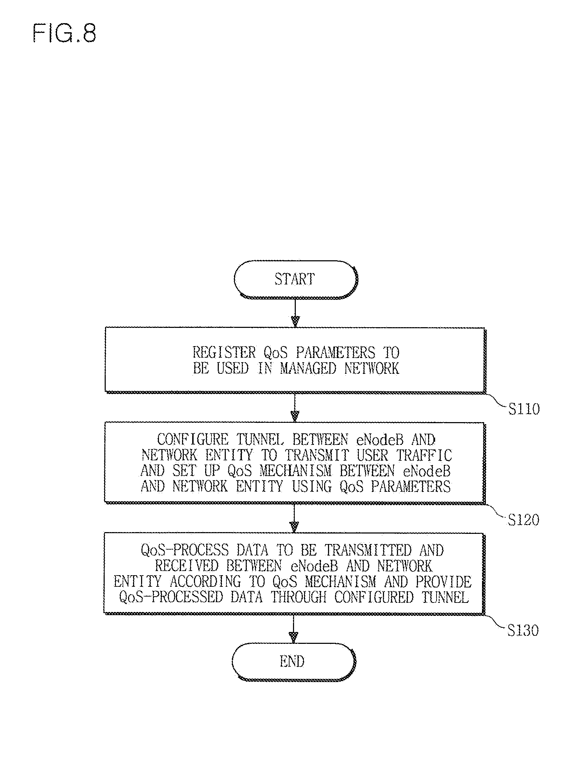

FIG. 8 is a flowchart showing a data exchange method capable of guaranteeing QoS between an eNodeB and a network entity according to an exemplary embodiment of the present invention;

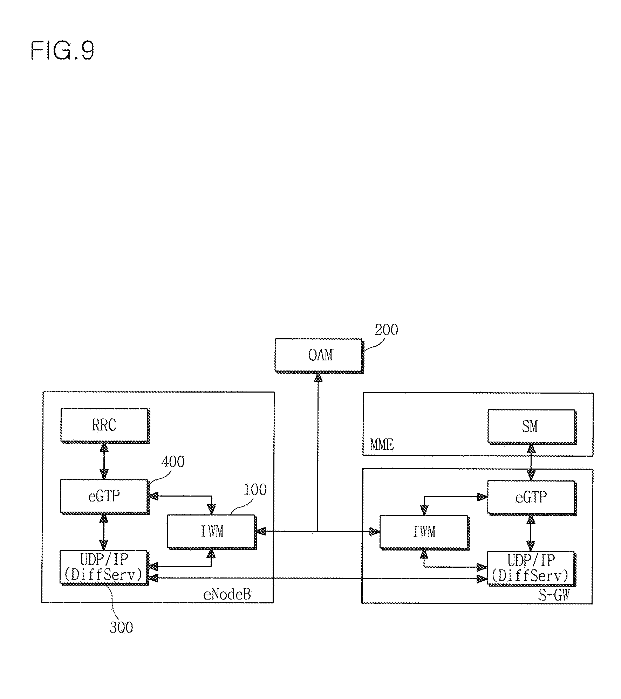

FIG. 9 shows an example of implementing an inter working module (IWM) in an eNodeB and an S-GW of the 3G LTE system;

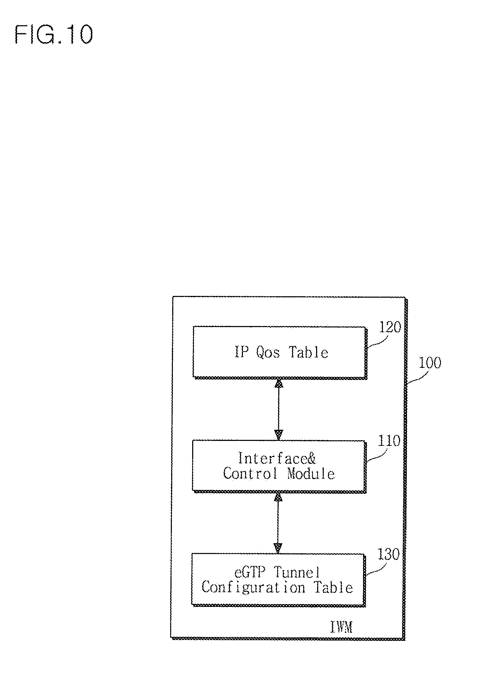

FIG. 10 is a block diagram showing the configuration of the IWM according to an exemplary embodiment of the present invention;

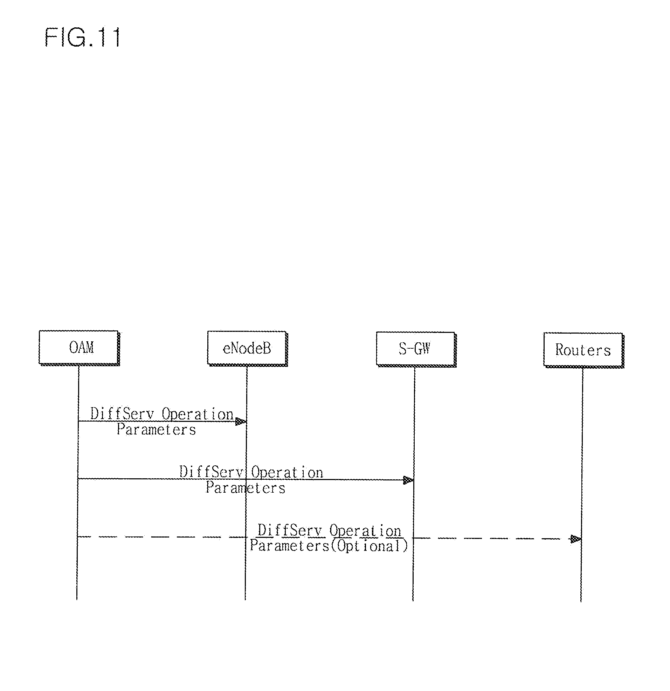

FIG. 11 shows an operation parameter transmission procedure for differentiated services (DiffServ);

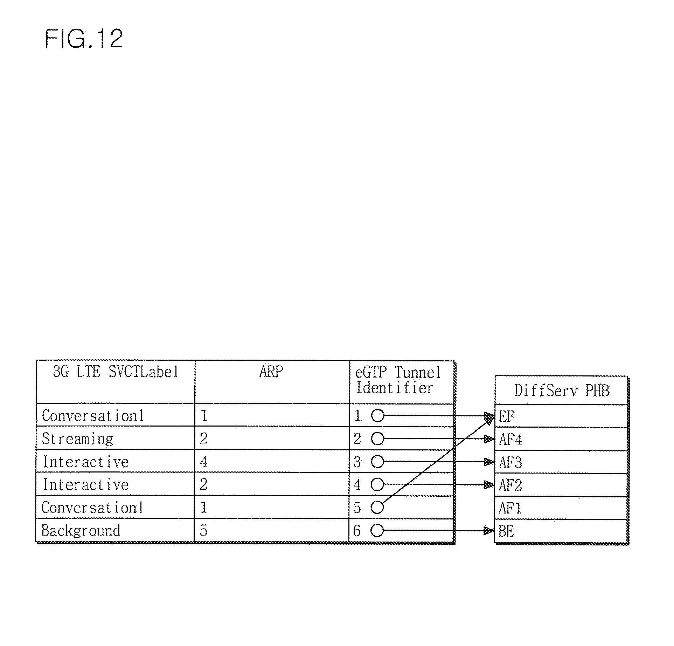

FIG. 12 shows an example of a mapping relation of an IP QoS table and an evolved GTP (eGTP) tunnel configuration table processed by the IWM;

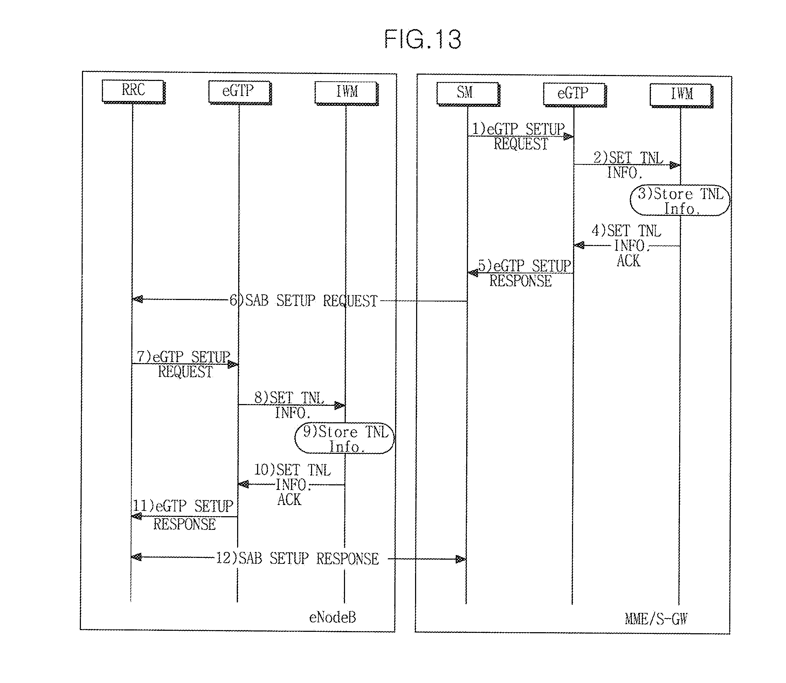

FIG. 13 shows an operation procedure of the IWM when a tunnel is configured between an eNodeB and an S-GW;

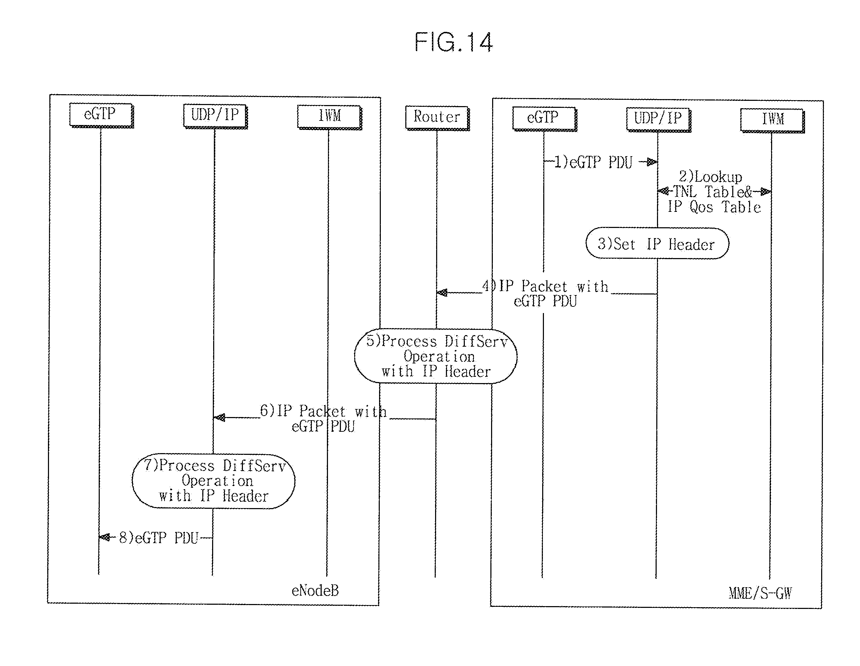

FIG. 14 shows a downlink traffic transmission procedure; and

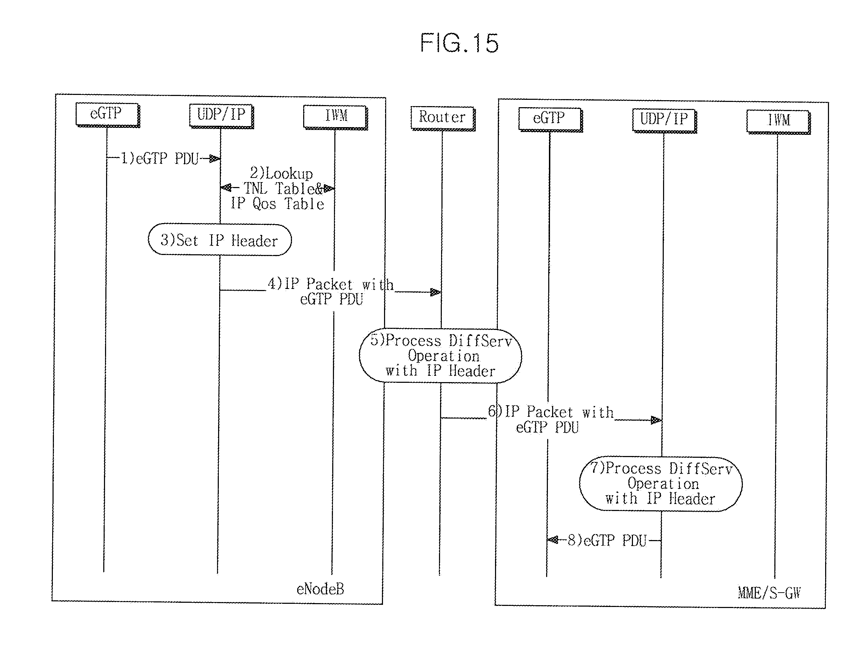

FIG. 15 shows an uplink traffic transmission procedure.

### DETAILED DESCRIPTION OF EXEMPLARY EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

An integrated services (IntServ) model and a DiffServ model are provided to guarantee QoS upon data transmission and reception in an IP network.

In the IntServ model, two new service classes (guaranteed service and predictive service) are added to best effort services. The guaranteed service is a service to be provided within a maximum delay bound capable of being accommodated, and the predictive service is a service to be provided within a delay bound capable of being statistically accommodated.

To add these services, routers should secure resources for guaranteeing QoS required for a specific packet stream or flow. That is, before one stream or flow is set, resources requested by a user should be secured using the routers. The secured resources include a bandwidth, memory, and the like.

To set the stream or flow, a signaling protocol is required to secure the resources between the routers. For this, the IntServ model uses a resource reservation protocol (RSVP) as the signaling protocol.

The DiffServ model has been introduced to address a problem occurring in an extension of the IntServ model. In the DiffServ model, flows are classified into service classes and a packet of each service class is processed in an intermediate router. The DiffServ model does not require a signal procedure and flow state management for every router. A packet is processed by inserting QoS indication information into a specific field of an IP header.

This method addresses a scheduling problem by dividing and aggregating all traffics according to required QoS. Moreover, the method is different from the RSVP in that a problem of a connection setup cost of the RSVP is removed since no QoS information is exchanged between a destination and a source.

However, there is a problem in that a traffic aggregation model used in DiffServ has low predictability. That is, it is difficult to guarantee a service of a specific level since reservation, signaling mechanism, and traffic shaping are absent in the DiffServ model.

According to an exemplary embodiment of the present invention, when data is transmitted and received between a base station (eNodeB) and a network entity such as an S-GW or the like, QoS of an IP layer level considering an IP network structure in the mobile communication system can be guaranteed by applying a technique for guaranteeing QoS to be provided in the IP network as exemplarily described above.

That is, a data exchange method capable of guaranteeing QoS between an eNodeB and a network entity proposed in the present invention is a technology capable of transmitting and receiving data of which QoS is guaranteed between the eNodeB and the network entity of the mobile communication system by organically interfacing a bearer setup technology of the mobile communication system and a method for guaranteeing QoS of the IP network.

FIG. 4 shows an example of bearer setup for a user service in a mobile communication system, and shows a bearer setup structure for the user service in a 3G LTE system.

To exchange data for the user service, a system architecture evolution (SAE) radio bearer (RB) is used between an eNodeB of an evolved UTRAN (E-UTRAN) and a UE, and an SAE access bearer (AB) is used between the eNodeB and a gateway (S-GW or PDN gateway).

The 3G LTE system will use an eGTP achieved by updating a GTP used in an existing GPRS-based 3GPP system to transmit/receive data between an eNodeB and an S-GW, and will use a form in which a function can be added according to need.

FIG. 5 shows a U-plane protocol structure of the 3G LTE system. To control an operation for configuring and releasing an eGTP tunnel between the eNodeB and the S-GW, the 3G LTE system operates by interfacing with a control plane (C-plane). For this, the eNodeB operates by interfacing with a radio resource control (RRC) entity for a call processing function and an eGTP entity, and the S-GW operates by interfacing with a session management (SM) entity, located in a mobility management entity (MME), responsible for managing a session and the eGTP entity.

Protocols on the C-plane interface with each other through a signal procedure using an S 1 application protocol (S1-AP) for eGTP tunnel control between the eNodeB and the S-GW.

FIG. 6 shows a message procedure for configuring an eGTP tunnel between the eNodeB and the S-GW.

Referring to FIG. 6, in operation 1), the SM entity requests the eGTP entity of the S-GW to configure a tunnel for a service.

In operation 2), a tunnel configuration response to the request of operation 1) is performed.

In operation 3), the SM entity requests the RRC entity to set up a radio bearer of a radio zone and requests the eGTP entity of the eNodeB to configure a tunnel.

In operation 4), the RRC entity of the eNodeB requests the eGTP entity to configure a tunnel for a service.

In operation 5), a tunnel configuration response to the request of operation 4) is performed.

In operation 6), a procedure for responding to the tunnel configuration request of operation 3) is performed.

FIG. 7 shows a network structure of the 3G LTE system.

The eNodeB and the S-GW interface through a network set by an operator. This network is an operator managed network. The operator operates an operation, administration and maintenance (OAW) module or the like, and the OAM module interfaces with each function node of the network, for example, a router or the like. Each function node has a DiffServ-based QoS mechanism to provide DiffServ-based QoS.

According to an exemplary embodiment of the present invention, when data is transmitted and received between an eNodeB and a network entity, QoS of an IP layer level considering an IP network structure in the mobile communication system can be guaranteed by applying a technique for guaranteeing QoS to be provided in the IP network as exemplarily described above. At this time, the network entity can be an S-GW of the 3G LTE system.

For this, the present invention registers QoS parameters to be used in the managed network, sets up a QoS mechanism between the eNodeB and the network entity using the QoS parameters, and QoS-processes data to be transmitted and received between the eNodeB and the network entity according to the QoS mechanism, thereby providing the QoS-processed data.

FIG. 8 is a flowchart showing a data exchange method capable of guaranteeing QoS between the eNodeB and the network entity according to an exemplary embodiment of the present invention.

In the data exchange method capable of guaranteeing the eNodeB and the network entity according to the exemplary embodiment of the present invention as shown in FIG. 8, QoS parameters to be used in the managed network are registered in operation S110.

At this time, the QoS parameters can be set by the OAM module defining a criterion and method for providing an OAM function, for example, the OAM module of the 3G LTE system. The QoS parameters set by the OAM module are registered by receiving the QoS parameters and storing the received QoS parameters in an internal table.

On the other hand, the QoS parameters can be operation parameters of the DiffServ model used to guarantee QoS when data is transmitted and received in the IP network.

When the QoS parameters are completely registered in operation S110, a tunnel between the eNodeB and the network entity is configured to transmit user traffic and the QoS mechanism between the eNodeB and the network entity is set up using the QoS parameters in operation S120 in the data exchange method capable of guaranteeing the QoS between the eNodeB and the network entity according to the exemplary embodiment of the present invention.

At this time, a tunnel for a service between the eNodeB and the network entity can be configured by setting up an access bearer under control of the C-plane.

The QoS mechanism between the eNodeB and the network entity can be set up by configuring an application protocol-based tunnel operating in an IP layer between the eNodeB and the network entity and interfacing the QoS parameters and QoS of an application protocol.

At this time, the network entity configuring the tunnel with the eNodeB can be the S-GW of the 3LTE system or the application protocol can be the eGTP achieved by updating the GTP applied to the GPRS-based 3GPP system.

For example, the QoS mechanism between the eNodeB and the network entity can be set up by guaranteeing the QoS of the IP layer interfacing with the QoS of the eGTP using the DiffServ operation parameters and mapping between the DiffServ and the configured eGTP tunnel.

When the tunnel configuration and the QoS mechanism setup are completed in operation S120, data to be transmitted and received between the eNodeB and the network entity is QoS-processed by the QoS mechanism and the QoS-processed data is provided through the configured tunnel in operation S130 in the data exchange method capable of guaranteeing the QoS between the eNodeB and the network entity according to the exemplary embodiment of the present invention.

According to the exemplary embodiment of the present invention, a differentiated IP packet service can be provided by guaranteeing the QoS of the IP layer level considering the IP network structure in the IP-based mobile communication system.

The data exchange method capable of guaranteeing the QoS between the eNodeB and the network entity according to the present invention will be described in detail with reference to a specific embodiment of the 3G LTE system.

To guarantee the QoS of the IP layer level considering the IP network structure in the IP-based mobile communication system, the present invention performs data processing capable of guaranteeing the QoS between the eNodeB and the network entity by introducing and employing an IWM capable of being mounted in the form of any software, hardware, or combination thereof in the eNodeB or the network entity.

FIG. 9 shows an example of implementing the IWM in the eNodeB and the S-GW of the 3G LTE system. FIG. 10 is a block diagram showing the configuration of the IWM according to an exemplary embodiment of the present invention.

An 1WM 100 interfaces with an OAM module 200 or an IP layer DiffServ module 300 and an eGTP module 400, and includes an interface & control module 110 responsible for a table search and QoS mapping function, an IP QoS table 120 for storing DiffServ operation parameters of the OAM module, and an eGTP tunnel configuration table 130 for storing tunnel information received from the eGTP module.

### (QoS Parameter Registration)

When the system initially operates, the OAM module 200 transfers DiffServ operation parameters set by the operator to each functional node through a message procedure as shown in FIG. 11. Function nodes of the managed network mentioned in the present invention are network entities of the eNodeB, the S-GW, and the router for performing a function for routing IP traffic shown in FIG. 7.

The DiffServ operation parameters can include information regarding DiffServ per hop behavior (PHB) and drop precedence provided in the existing request for comment (RFC). A class of DiffServ PHB is defined by a characteristic of service to be provided by the operator. The PHB is the packet forwarding behavior to be applied to a specific behavior aggregate (BA). The BA is an aggregate of user flows having the same identifier.

Upon receiving the DiffServ operation parameters, the IWM 100 of the eNodeB and the S-GW stores corresponding DiffServ operation parameter information in the IP QoS table 120 thereof and sends the DiffServ operation parameters to the IP layer DiffServ module 300 so as to transmit and receive an eGTP packet data unit (PDU).

Upon receiving the DiffServ operation parameters, the IP layer DiffServ module 300 stores corresponding DiffServ operation parameter information in the internal table. Network equipment such as the router of the managed network stores the DiffServ operation parameters provided from the OAM module 200 using an additional module such as the IWM 100 in the same way as that of the above-mentioned procedure, or stores the DiffServ operation parameters manually set by the operator.

Table 1 shows an example of DiffServ operation parameters to be transferred to each function node, and information thereof is stored in the IP QoS table 120 of the IWM 100.

**TABLE 1**

| IP QoS Table information |
|---|
| DiffServ PHB |
| EF |
| AF4 |
| AF3 |
| AF2 |
| AF1 |
| BE |

### (Tunnel Configuration and QoS Mechanism Setup)

The 3G LTE system sets up an SAE bearer in response to a user request. For this, an SAE access bearer is set up between the eNodeB and the S-GW.

Under control of the C-plane, the SAE access bearer uses an eGTP-based tunnel and performs a function for interfacing the QoS on the eGTP and the DiffServ QoS mechanism of the IP layer through the IWM 100 along with the tunnel configuration.

To perform the above-mentioned function, the IWM 100 receives eGTP tunnel configuration information from the eGTP module 400 and guarantees the IP layer QoS by interfacing with the eGTP module 400 and the IP layer DiffServ module 300 using the DiffServ operation parameters received from the OAM module 200 in the QoS parameter registration process.

The IWM 100 performs a function for mapping the overall DiffServ PHB and the eGTP tunnel to be configured using a 3G LTE service class type (SVCT), and particularly, performs a mapping function using the 3G LTE SVCT and allocation, retention and priority (ARP) with respect to the AF PHB.

Table 2 shows an example of tunnel configuration parameters received from the eGTP module 400, and information thereof is stored in the eGTP tunnel configuration table 130 of the IWM 100.

**TABLE 2**

| eGTP Tunnel Configuration Table Information | | |
|---|---|---|
| 3G LTE SVCT Label | ARP | eGTP TE-ID |
| Conversational | 1 | 1 |
| Streaming | 2 | 2 |
| Interactive | 4 | 3 |
| Interactive | 2 | 4 |
| Conversational | 1 | 5 |
| Background | 5 | 6 |

FIG. 12 shows an example of a mapping relation of the IP QoS table 120 of Table 1 and the eGTP tunnel configuration table 130 of Table 2 processed by the IWM 100.

FIG. 13 shows an operation procedure of the IWM 100 when a tunnel is configured between the eNodeB and the S-GW.

Referring to FIG. 13, in operation 1), the SM entity of the MME sends a service tunnel configuration request to the eGTP module 400 located in the S-GW.

In operation 2), the eGTP module 400 transmits tunnel information to be stored in the eGTP tunnel configuration table 130.

In operation 3), the IWM 100 receives and stores the tunnel information in the eGTP tunnel configuration table 130.

In operation 4), a procedure for acknowledging a request of operation 2) is performed.

In operation 5), a tunnel configuration response to the request of operation 1) is performed.

In operation 6), the SM entity of the MME requests the RRC entity of the eNodeB to set up a radio bearer of a radio zone and configure a tunnel between the eNodeB and the S-GW.

In operation 7), the RRC entity of the eNodeB requests the eGTP module 400 to configure a tunnel for service.

In operation 8), the eGTP module 400 sends tunnel information to be stored in the eGTP tunnel configuration table 130 to the IWM 100.

In operation 9), the IWM 100 receives and stores the tunnel information in the eGTP tunnel configuration table 130.

In operation 10), a procedure for acknowledging a request of operation 8) is performed.

In operation 11), a tunnel configuration response to the request of operation 7) is performed.

In operation 12), a tunnel configuration response to the request of operation 6) is performed.

### (QoS-Processing and Transmission)

After the eGTP tunnel configuration and the DiffServ QoS mechanism setup as described above are completed, uplink/downlink user data traffic is transmitted and received. An operation procedure between the eNodeB and the S-GW is as follows.

When the data is transmitted, the IWM 100 guarantees the IP QoS of each eGTP PDU by performing a function for interfacing with the DiffServ PHB using the eGTP tunnel configuration table 130 set by interfacing with the IP layer DiffServ module 300 and the PHB-based IP QoS table 120.

To perform this procedure, the IP layer DiffServ module 300 operates by interfacing with the IWM 100 based on a TE-ID included in the eGTP PDU, and sends differentiated service code point (DSCP) code information to be included in an IP header to the IP layer DiffServ module 300 using eGTP tunnel information set by the IWM 100 and the IP QoS table 120.

When data is received, the IP QoS is guaranteed by processing a packet according to the PHB set for the IP DiffServ using a DSCP code set in an IP packet header.

Other function nodes (for example, a router and the like) located in the managed network can satisfy the QoS requested by the user when data is transferred between the eNodeB and the S-GW by processing a received IP packet based on a DiffServ operation parameter (PHB) according to initial setting of the OAM module 200.

FIG. 14 shows a downlink traffic transmission procedure.

Referring to FIG. 14, in operation 1), an eGTP PDU is received from the eGTP module 400 of the S-GW.

In operation 2), the DiffServ PHB for a corresponding packet is acquired using a TE-ID included in the eGTP PDU.

In operation 3), an IP header is configured using a DSCP corresponding to the acquired DiffServ PHB.

In operation 4), the IP packet including the eGTP PDU is transferred to the managed network.

In operation 5), a network node located in the managed network, for example, a router, forwards the packet by considering the DSCP of the IP packet based on the DiffServ PHB set by the OAM module 200.

In operation 6), the IP packet including the eGTP PDU is received in a UDP/IP layer of the eNodeB.

In operation 7), the IP layer DiffServ module 300 processes the eGTP PDU by considering the DSCP of the IP packet on the basis of the DiffServ PHB set by the OAM module 200.

In operation 8), the eGTP PDU is transmitted to the eGTP module 400 of the eNodeB.

FIG. 15 shows an uplink traffic transmission procedure.

In operation 1), an eGTP PDU is received from the eGTP module 400 of the eNodeB.

In operation 2), the DiffServ PHB for a corresponding packet is acquired using a TE-ID included in the eGTP PDU.

In operation 3), an IP header is configured using a DSCP corresponding to the acquired DiffServ PHB.

In operation 4), the IP packet including the eGTP PDU is transferred to the managed network.

In operation 5), a network node located in the managed network, for example, a router, forwards the packet by considering the DSCP of the IP packet based on the DiffServ PHB set by the OAM module 200.

In operation 6), the IP packet including the eGTP PDU is received in a UDP/IP layer of the S-GW.

In operation 7), the IP layer DiffServ module 300 processes the eGTP PDU by considering the DSCP of the IP packet on the basis of the DiffServ PHB set by the OAM module 200.

In operation 8), the eGTP PDU is transmitted to the eGTP module 400 of the S-GW.

According to the exemplary embodiment of the present invention, QoS parameters to be used in a managed network are registered, a QoS mechanism between an eNodeB and a network entity is set up using the QoS parameters, and data to be transmitted and received between the eNodeB and the network entity are QoS-processed and provided, thereby guaranteeing QoS of an IP layer level considering an IP network structure in an IP-based mobile communication system and providing a differentiated IP packet service.

As apparent from the above description, the present invention can be used in technical fields for processing data between an eNodeB and a network entity of an IP-based mobile communication system and application fields thereof.

The present invention is advantageous in that a differentiated IP packet service can be provided by guaranteeing QoS of an IP layer level considering an IP network structure in an IP-based mobile communication system.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

## Claims

1. A data exchange method for guaranteeing quality of service (QoS) between an evolved Node-B (eNodeB) and a network entity, comprising:
registering QoS parameters to be used in a managed network;
configuring a tunnel between the eNodeB and the network entity for a user traffic transmission, and setting up a QoS mechanism between the eNodeB and the network entity using the QoS parameters; and
QoS-processing data to be transmitted and received between the eNodeB and the network entity according to the QoS mechanism, and providing the QoS-processed data through the configured tunnel.

2. The data exchange method of claim 1, wherein the QoS parameters are set by an operation, administration and maintenance (OAM) module defining a criterion and method for providing a network OAM function.

3. The data exchange method of claim 2, wherein the registering of the QoS parameters comprises:
registering the QoS parameters by receiving the QoS parameters set by the OAM module and storing the received QoS parameters in an internal table.

4. The data exchange method of claim 1, wherein the configuring of the tunnel between the eNodeB and the network entity comprises:
configuring a tunnel for a service between the eNodeB and the network entity by setting up an access bearer between the eNodeB and the network entity under control of a control plane (C-plane).

5. The data exchange method of claim 4, wherein the configuring of the tunnel between the eNodeB and the network entity further comprises:
configuring an application protocol-based tunnel operating in an IP layer between the eNodeB and the network entity, and interfacing the QoS parameters and QoS of an application protocol.

6. The data exchange method of claim 5, wherein the application protocol is an evolved general packet radio service (GPRS) tunneling protocol (eGTP) achieved by updating a GTP applied to a GPRS-based 3GPP system.
